## Europäisches Patentamt
## European Patent Office
## Office européen des brevets

(19)

(11) Veröffentlichungsnummer: **0 089 012**
**B1**

(12)

# EUROPÄISCHE PATENTSCHRIFT

(45) Veröffentlichungstag der Patentschrift:
11.06.86

(51) Int. Cl.⁴: **E 04 B 1/62**, F 24 D 3/00

(21) Anmeldenummer: 83102345.2

(22) Anmeldetag: 10.03.83

(54) Verbundplatte für eine Fussbodenheizung.

(30) Priorität: 12.03.82 DE 3209091

(43) Veröffentlichungstag der Anmeldung:
21.09.83 Patentblatt 83/38

(45) Bekanntmachung des Hinweises auf die Patenterteilung:
11.06.86 Patentblatt 86/24

(84) Benannte Vertragsstaaten:
AT BE CH DE FR GB IT LI LU NL SE

(56) Entgegenhaltungen:
DE - A - 3 010 932
DE - U - 8 209 244

(73) Patentinhaber: Wenger, Hans, CH-8574 Lengwil (CH)

(72) Erfinder: Wenger, Hans, CH-8574 Lengwil (CH)

(74) Vertreter: Riebling, Günter, Dr. et al, Patentanwälte Dr.-Ing., Dipl.-Ing., Ing.(grad) Günter Riebling Dr.-Ing., Dipl.-Ing. Peter Riebling Rennerle 10 Postfach 3160, D-8990 Lindau (Bodensee) (DE)

LIBER, STOCKHOLM 1986

## Beschreibung

Die Erfindung betrifft eine Verbundplatte für Fußbodenheizungen nach dem Oberbegriff des Patentanspruchs 1.

Der Aufbau bisher bekannter Fußbodenheizungen besteht darin, daß z.B. auf einer Massiv-Betondecke zunächst eine Polyäthylen-Folie mit den Rändern einander überlappend aufgebracht wird, die als Dampfbremse wirkt. Auf diese Folie werden Isoliertafelelemente aufgebracht, in denen Kanäle eingefräst sind. Die Isoliertafelelemente werden dicht aneinandergestossen, sie bestehen z.B. aus einem Hart-Kunststoffschaum, einem Polystyrol-Schaum oder dergleichen.

In die eingefrästen Kanäle werden dann die wasserführenden Rohrschlangen der Fußbodenheizung eingelegt und an den Wärmeerzeuger angeschlossen. Auf den so hergestellten Untergrund wird dann Leitbeton aufgeschüttet, der einen hohen Kiesanteil und einen geringen Sandanteil enthält. Dieser Leitbeton wirkt als Ausgleichsschicht, um die entstehenden Wärmespannungen aufzunehmen. Auf diesen Leitbeton wird dann herkömmlicher Estrichüberzug aufgebracht, auf dessen Oberseite nach dem Abbinden schließlich der Fußbodenbelag aufgebracht wird.

In ähnlicher Weise sind Fußbodenheizungen mit elektrischen Heizdrähten aufgebaut.

Nachteil dieser bekannten Fußbodenaufbauten ist die relativ große Konstruktionshöhe. Zunächst nehmen die auf der Massiv-Betondecke verlegten Isolierplatten erhebliche Raumhöhe in Anspruch, denn je nach Isolierungsanforderungen liegt deren Dicke im Bereich von etwa 30 - 60 mm.

Der Leitbeton muß die wasserführenden Rohrschlangen mindestens um 60 - 80 mm überdecken, damit es nicht zu Wärmebrüchen kommt.

Der hierauf aufgebaute Fußboden-Estrich muß im Bereich von etwa 40 - 60 mm Dicke gewählt werden, um Brüche aufgrund von Wärmespannungen zu vermeiden. Der gesamte Aufbau hat also etwa eine Stärke von 12 - 15 cm von der Massivdecke aus gerechnet. Hiermit besteht im Wohnungsbau der Nachteil, daß vergrößerte Geschoßhöhen gebaut werden müssen, im Vergleich zu Geschoßhöhen, bei denen herkömmliche Radiatoren-Heizungen verwendet werden. Durch die größeren Geschoßhöhen erhöhen sich die Baukosten erheblich, denn es müssen entsprechend mehr Wandbaustoffe, Wandverkleidungen und dergleichen eingebaut werden.

Die Montage der bekannten Fußbodenheizungen ist aus obigen Gründen aufwendiger. Reparaturen können nur schwierig durchgeführt werden, denn es muß zunächst der Estrich aufgebrochen werden, um danach den Leitbeton aufzubrechen, um dann an die Wasserleitungsrohre zu gelangen.

Die im Oberbegriff des Patentanspruchs 1 genannte Verbundplatte bezieht sich also darauf, daß es bisher nur bekannt ist, Verbundplatten aus Beton-Werkstoffen zu verwenden.

Die DE-A-3 010 932 beschreibt eine Fußbodenheizung, wobei in der Oberseite eines Holzdielenfußbodens ein Kanal vorgesehen ist, in den ein Wärmeleitelement eingesetzt ist, das das Heizmedium, beispielsweise Heißwasser, führt. Das Wärmeleitelement ist über die gesamte Länge an die Unterseite einer Platte aus gut wärmeleitendem Material angelötet, die wiederum von einem Fußbodenbelag abgedeckt ist. Hier ist also das Heizmedium direkt unter dem Fußbodenbelag vorgesehen, ohne Zwischenlage einer Holz-Spanplatte.

Die vorliegende Erfindung hat sich ausgehend von einer Verbundplatte für Fußbodenheizungen der eingangs genannten Art die Aufgabe gestellt, eine solche so weiterzubilden, daß wesentlich geringere Konstruktionshöhen beim Aufbau einer Fußbodenheizung bei gleicher oder verbesserter Wärmeleistung und bei verbesserter Wartung und Montage gewährleistet ist.

Zur Lösung der gestellten Aufgabe ist die Erfindung dadurch gekennzeichnet, daß die Verbundplatte aus einer Holz-Spanplatte besteht, auf deren Ober- und Unterseite jeweils eine wärmeleitende Schicht angeordnet ist, und daß in gegenseitigem Abstand in der Spanplatte vertikale Bohrungen angeordnet sind, in denen jeweils ein gut-wärmeleitendes Leitelement in Körperkontakt mit der wärmeleitenden Schicht an der Unter-, sowie mit der wärmeleitenden Schicht an der Oberseite angeordnet ist.

Mit der vorliegenden Erfindung wird also ein ganz neuer Weg beschritten, denn der herkömmliche Leit- und Estrichbeton wird nach der Erfindung durch ein wärmeleitendes, steifes Material ersetzt. Hierdurch ergeben sich mehrere Vorteile gleichzeitig. Durch den Wegfall des Leit- und Estrichbetons verringert sich die Konstruktionshöhe bei einer Fußbodenheizung nach der Erfindung in erheblichem Maße, denn statt dieser beiden Betonschichten wird eine einzige, wärmeleitende, steife Schicht in Form einer Verbundplatte verlegt. Die Rohrschlangen bzw. die elektrischen Heizdrähte der Fußbodenheizung sind also von oben durch die Verbundplatte hindurch zugänglich. Die Verbundplatte muß hierzu aufgesägt oder sonstwie geöffnet werden, was im Hinblick auf das verwendete Material wesentlich leichter fällt, als das Aufbrechen von zwei verschiedenen Betonschichten.

Nach der Erfindung wird vor allem als Material für eine Verbundplatte eine Holz-Spanplatte, zementgebundene Spanplatte, oder eine zementgebundene Holzwolleplatte verwendet. Es wird aber eine Holz-Spanplatte bevorzugt, denn sie ergibt schon eine glatte Oberfläche, so daß auf diese Oberfläche unmittelbar der Fußbodenbelag aufgebracht werden kann, während bei einer zementgebundenen Holzwolleplatte entsprechende Ausgleichsspachtelungen vorgenommen werden müssen Damit das wärmeisolierende Material der Verbundplatte einen genügenden Wärmetransport von den wasserdurchflossenen Rohrschlangen zur Oberseite der Verbundplatte gewährleistet, ist es nach der vorliegenden technischen Lehre vorgeschlagen, daß in die Verbundplatte Wärme-Leitelemente eingebaut sind. Diese Wärmeleitelemente bewirken den geforderten Wärmetransport durch unmittelbare Wärmeübertragung.

Die wärmeleitende Schicht besteht hierbei nach dem Gegenstand des Anspruches 2 aus einer mit der Ober- und Unterseite verklebten Leichtmetallfolie, die sich vollflächig über die Verbundplatte erstreckt.

Nach dem Gegenstand des Anspruches 3 wird alternativ vorgeschlagen, daß die wärmeleitende Schicht aus parallelem Abstand nebeneinander und die Stirnseiten der Leitelemente verbindenden Leichtmetallstreifen besteht. Diese Leichtmetallstreifen sind vorzugsweise in Nuten in der Ober- und Unterseite der Spanplatte eingelegt, so daß deren Deckflächen jeweils bündig mit der Ober- bzw. Unterseite der Spanplatte ist. Die an der Unterseite angeordnete, wärmeleitende Schicht (entweder die vollflächige Leichtmetallfolie oder die Leichtmetallstreifen) nehmen also die Wärme durch Wärmeleitung unmittelbar auf und geben sie durch Körperkontakt an die in die vertikalen Bohrungen eingesetzten Wärme-Leitelemente weiter. Diese leiten die Wärme in vertikaler Richtung durch das Material der Verbundplatte hindurch und stehen an der Oberseite in unmittelbarem Wärmekontakt mit der auf der Oberseite der Spanplatte angebrachten Leichtmetallfolie bzw. mit den Leichtmetallstreifen. Es ergibt sich hiermit ein außerordentlich guter Wärmeübergang mit hohem Wirkungsgrad und die verwendete Spanplatte weist eine derartige mechanische Stabilität auf, daß sie bei einer Dicke von etwa 25 mm allen Ansprüchen hinsichtlich mechanischer Stabilität, Verzugsfestigkeit, Trittsicherheit, Belastbarkeit usw. entspricht.

Zudem bietet die nach vorher beschriebenen Ansprüchen veredelte Spanplatte in der nichtbeheizten Periode einen gesunden und behaglichen Untergrund auf.

Das Leitelement kann hierbei nach dem Gegenstand des Anspruches 4 aus einer kalt- oder wärmehärtbaren Vergußmasse bestehen. Eine solche Vergußmasse kann z.B. ein kunststoffgebundener Ton sein, der mit entsprechenden Härterzusätzen vermischt ist, der ein Kalt- oder Warmaushärten gewährleistet.

Nach dem Eingießen der Vergußmasse in die vertikalen Bohrungen muß die Verbundplatte dann nur noch abgeschliffen werden und ist dann sofort einsatzbereit. Auch hieraus ergibt sich, daß die Herstellungs- und Montagekosten für eine Verbundplatte nach der Erfindung wesentlich geringer sind, als die vergleichbaren Kosten für die Anbringung der Leichtbetonschicht und der darauffolgenden Estrichschicht. Ganz abgesehen davon, daß der Zeitaufwand beim Aufbringen der genannten Betonschichten außerordentlich hoch ist (man muß etwa 1 Monat für die Abbindezeit rechnen), wohingegen die Verbundplatte nach der Erfindung sofort verlegt und benützt werden kann.

Nachdem die Verwendung einer wärmeleitfähigen Vergußmasse oder die Verwendung von einsetzbaren, die Verbundplatte durchdringenden Leichtmetalltöpfen relativ kostenaufwendig ist, wird es in einer Weiterbildung der vorliegenden Erfindung vorgesehen, daß als Leitelemente einfache, handelsübliche Sternnägel verwendet werden. Statt der Verwendung von Sternnägeln können auch sogenannte Schraubnägel verwendet werden.

Diese Nägel werden in dichtem Abstand abwechselnd von der einen und von der anderen Seite der Verbundplatte eingeschlagen, um ein Spalten des Materials zu vermeiden. Die Verbundplatte wird also von einer Vielzahl von Nägeln durchdrungen. Evtl. herausstehende Köpfe und Spitzen der Nägel werden durch Planschleifen der Verbundplatte entfernt, so daß die leitfähige Fläche dieser Leitelemente genau bündig mit der Oberfläche der Verbundplatte ist.

Statt herkömmlicher Nägel können auch nach dem Gegenstand des Anspruches 8 entsprechende handelsübliche Hohlschrauben verwendet werden. Diese Hohlschrauben werden in vorher eingebrachte, vertikale Bohrungen der Verbundplatte eingesetzt, wobei zunächst der eine Teil der Hohlschraube von der einen Seite her eingesetzt wird, und von der anderen Seite dann der andere Teil auf den bereits schon eingesetzten, ersten Teil aufgeschraubt wird.

Statt eines einschichtigen Aufbaus einer wärmedämmenden Verbundplatte kann auch ein mehrschichtiger Aufbau vorgesehen sein, um eine bessere, horizontale Wärmeverteilung zu gewährleisten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1: vergrößerter Vertikalschnitt durch eine Verbundplatte in einer ersten Ausführungsform;

Fig. 2: perspektivische Darstellung eines Leitelements;

Fig. 3: Draufsicht auf eine Verbundplatte in einer zweiten Ausführungsform;

Fig. 4: Schnitt durch eine Fußbodenheizung mit Verwendung einer Verbundplatte nach Figur 1 bei Aufbau auf einem Betonboden;

Fig. 5: Schnitt durch eine Fußbodenheizung mit Verwendung einer Verbundplatte nach Figur 1 bei Aufbau auf einem Bretterboden;

Fig. 6a und 6b: Seiten- und Stirnansicht eines Sternnagels;

Fig. 6c: Seitenansicht eines Schraubnagels;

Fig. 7: Draufsicht auf die mit Sternnägeln versehene Oberseite der Verbundplatte;

Fig. 8: Draufsicht auf die Unterseite der Verbundplatte nach Figur 7;

Fig. 9: Schnitt durch eine mit Sternnägeln bestückte Verbundplatte, die zusätzlich noch mit einer wärmeleitenden Schicht versehen ist;

Fig.10: Seitenansicht einer Hohlschraube;

Fig.11: Schnitt durch eine mehrschichtige Verbundplatte.

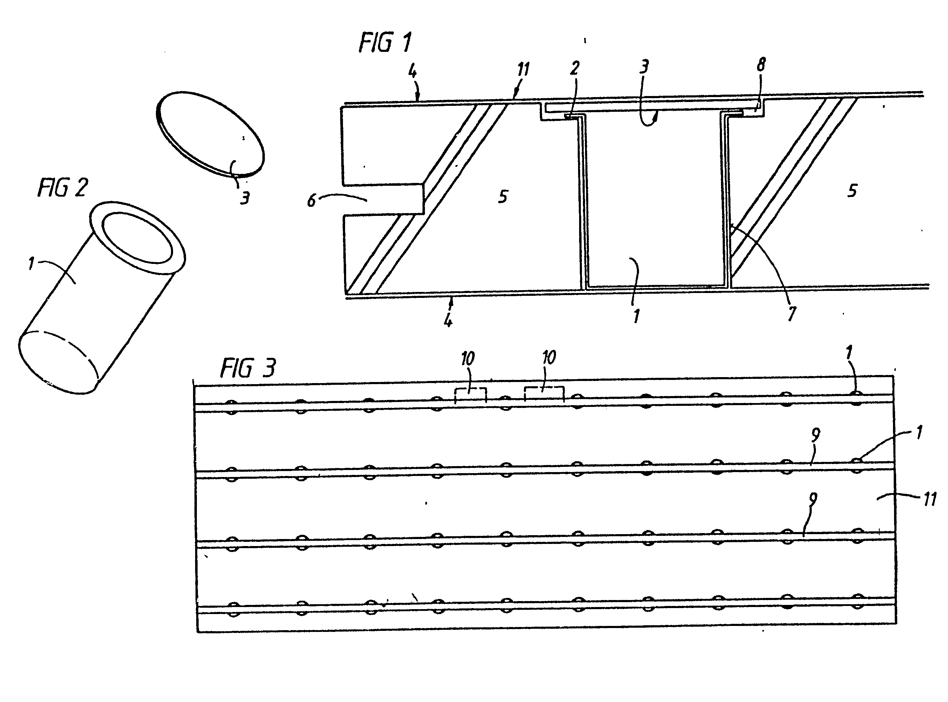

Die Figur 1 zeigt eine Verbundplatte 11, die im wesentlichen aus einer Spanplatte 5 besteht. Die Spanplatte ist eine leimgebundene Press-Span-Platte, die zur Verwendung in Feuchträumen auch phenolharz-verleimt sein kann. Statt der Verwendung einer Preß-Spanplatte kann auch eine zementgebundene Holzwolleplatte oder dergleichen verwendet werden. Es können sämtliche Platten verwendet werden, wie sie als Fußbodenplatten bereits schon im Wohnungsbau bekannt sind.

In regelmässigen Abständen (vergl. Fig. 3) sind in die Spanplatte 5 vertikale Bohrungen 7 eingebracht. Jede vertikale Bohrung 7 fluchtet mit einer Bohrung 8 vergrößerten Durchmessers an der Oberseite der Spanplatte 5.

In die Bohrung 7 ist ein in Figur 2 gezeigtes Leitelement 1 eingesetzt. Das Leitelement 1 besteht aus einem im Tiefzieh-Verfahren hergestellten, leichten Aluminiumbecher geringer Wanddicke. Die Wanddicke des Aluminiumbechers kann gering gehalten werden, denn er hat nur Wärmeübertragungs-Funktionen, nicht aber Druckübertragungsfunktionen. Die entsprechende Druckübertragungs-Funktion übernimmt ein Deckel 3, der vorzugsweise ebenfalls aus Aluminium besteht. Dieser Deckel 3 hat etwa eine Stärke von 1,5 mm und einen Durchmesser von ca. 30 mm.

Er liegt deckflächenbündig in der Bohrung 8 erweiterten Durchmessers an, so daß die bei der Begehung der Verbundplatte 11 entstehenden Druckkräfte von diesem Deckel 3 aufgenommen werden, und auf den Bohrungsgrund der Bohrung 8 übertragen werden.

Der Leichtmetallbecher (Leitelement 1) nach Fig. 2 weist auch einen stirnseitig umgebördelten Rand auf. Diese Abbördelung 2 liegt ebenfalls auf dem Grund der Bohrung 8 auf. Hierdurch wird eine ausgezeichnete Wärmeübertragung von dem Deckel 3 auf den Leichtmetallbecher des Leitelements 1 bewirkt, denn es kommt zu einer großflächigen Anlage.

Eine andere, nicht näher dargestellte Ausführungsform sieht vor, daß Deckel 3 und Aluminiumbecher aus einem werkstoffeinstückigen Teil bestehen.

Eine dritte, nicht näher dargestellte Ausführungsform sieht vor, daß der Deckel als zweiter Becher auf einen Becher nach Fig. 2 aufstülpbar ist, wobei die stirnseitige Abbördelung 2 in diesem Fall entfallen würde.

Die so mit Leitelementen 1 nach Figur 3 bestückte Spanplatte 5 wird dann nach dem Ausführungsbeispiel der Fig. 1 vollflächig mit einer Leichtmetallfolie 4 beklebt. Der Leimauftrag für die Verbindung der Leichtmetallfolie 4 mit der Ober- bzw. der Unterseite der Spanplatte 5 erfolgt selbstverständlich außerhalb des Bereichs der Deckel 3 bzw. der Böden des Leichtmetallbechers nach Fig. 2.

Die Leichtmetallfolie hat bevorzugt eine Schichtstärke von etwa 0,012 mm. Diese Schichtdicke ist jedoch nicht begrenzend für den vorliegenden Erfindungsgedanken aufzufassen, denn die Dicke der Aluminiumfolie ist nur aus Kostengründen so gewählt, nachdem sie lediglich Wärmeübertragungsfunktionen, nicht aber Druckübertragungsfunktionen ausübt.

Die in Figur 1 gezeigte Spanplatte wird mit ihrer Nut 6 in eine nicht näher dargestellte Federverbindung der gegenüberliegenden Spanplatte dicht angestossen und damit verbunden. Im Verbindungsbereich kann zusätzlich eine Verleimung erfolgen.

Figur 3 zeigt eine andere Ausführungsform einer Verbundplatte im Vergleich zu Fig. 1. Dort ist gezeigt, daß nicht eine vollflächige Überdeckung mit einer Leichtmetallfolie 4 gegeben ist, sondern daß die Stirnseiten der Leitelemente 1 jeweils durch parallel und im Abstand nebeneinander verlegte Leichtmetallstreifen 9 wärmeleitend verbunden sind. Die Leichtmetallstreifen 9 sind hierbei in Nuten eingelegt, die in die Oberund Unterseite der Verbundplatte 11 eingefräst sind. Anhand der Figur 1 kann man sich den Einbau der Leichtmetallstreifen 9 derart vergegenwärtigen, daß man sich vorstellt, daß die Leichtmetallstreifen 9 an die Stelle des dort gezeigten Deckels 3 treten und die Bohrung 8 nun als längsverlaufende Nut ausgebildet ist.

Der Leimauftrag zur Befestigung der Leichtmetallstreifen 9 im Bereich dieser Nuten erfolgt wiederum nur im Bereich 10 zwischen den vertikalen Bohrungen 7, 8.

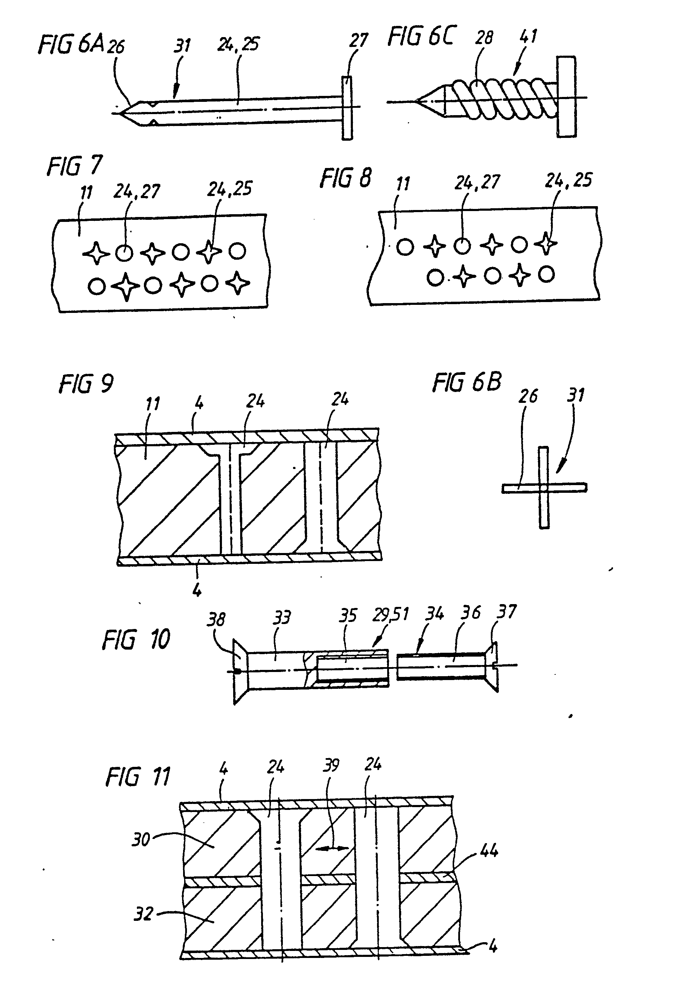

Die Figur 4 zeigt den Aufbau einer Fußbodenheizung unter Verwendung einer Verbundplatte 11 nach der Erfindung, wie sie für Betonboden verwendet wird.

Auf dem Betonboden 16 wird zunächst eine zwei bis vier cm starke Schallmatte 15 ausgelegt. Auf diese Schallmatte werden Polystyrol-Isolierelemente 14 in herkömmlicher Weise ausgelegt, wobei in diese Plattenelemente bereits schon die Kanäle eingefräst sind, in welche die Rohrschlangen 13 dann verlegt werden. Der gesamte Aufbau wird von oben durch eine Dampfbremse 12 aus einer PVC-Folie abgedeckt, die übereinander verlappend verlegt wird, oder an den Stoßrändern verklebt wird. Auf diese dampfdicht verlegte Dampfbremse 12 wird dann die in Fig. 1 oder die in Fig. 3 gezeigte Verbundplatte 11 aufgelegt. Man sieht, daß die Rohrschlangen 12 ihre Wärme unmittelbar an die Leichtmetallfolie 4 bzw. an die Leichtmetallstreifen 9 an der Unterseite der Verbundplatte abgeben. Uber den Wärmekontakt mit den Leitelementen 1 gelangt die Wärme auf den jeweiligen Deckel 3 und damit auf die obere Leichtmetallfolie 4, so daß sich die Verbundplatte 11 in kurzer Zeit erwärmt und die Wärme sehr gleichmässig auf die an der Oberseite angeordnete Leichtmetallfolie 4 abgibt.

Figur 5 zeigt die Ausführung einer Fußbodenheizung, wie sie für den Umbau oder für die Altbausanierung verwendet wird. Hier ist als Beispiel der Aufbau der Fußbodenheizung auf einen Bretterboden 21 angegeben. Auf diesen Bretterboden 21 wird zunächst eine Dampfbremse 12 ausgelegt, auf der dann eine Ausgleichsschüttung 2o (z.B. Bituperl) aufgebracht wird. Auf diese Ausgleichsschüttung werden etwa 8 mm starke Abdeckplatten 19 gelegt und dicht aneinandergestossen.

Auf die Abdeckplatten wird dann eine Ausgleichsschüttung 18 aus Feinsplit aufgeschüttet. Vor Anbringung der Ausgleichsschüttung aus Feinsplit aufgeschüttet. Vor Anbringung der Ausgleichsschüttung 18 wurden die Rohrschlangen 13 mit entsprechenden Trägern und Haltern verlegt. Das körnige Steinmaterial der Ausgleichsschüttung 18 überträgt ausgezeichnet die Wärme auf einen an der Oberseite angebrachten Wellkarton 17, der ein Eindringen der Splitschüttung in die Unterseite der Verbundplatte 11 verhindern soll. Auf diesen Wellkarton 17 wird dann die Verbundplatte in der Ausführung nach Figur 1 oder Figur 2 aufgelegt.

Aus den Zeichnungen nach Figur 4 und 5 wird deutlich, daß die Konstruktionshöhe im Vergleich zu bekannten Fußbodenheizungen sehr gering ist.

Das Einbetten der Rohrschlangen 13 in entsprechendes Isoliermaterial muß nach wie vor durchgeführt werden. Es entfällt aber die obere Abdeckung der Rohrschlangen durch Leichtbeton und Estrich-Beton, was zu den vorher beanstandeten großen Konstruktionshöhen führte. Die Verbundplatte 11 nach der Erfindung ist besonders schnell und leicht verlegbar, und ist besonders kostengünstig in der Herstellung. Sie kann mit den eingebrachten Leichtmetallstreifen 9 oder mit der aufgeklebten Metallfolie 4 leicht am Ort des Einbaus mit Holzsägeblättern geschnitten werden.

Bei den Ausführungsbeispielen nach den Figuren 6 - 11 wird erläutert, daß es auch möglich ist, mit herkömmlichen, handelsüblichen Wickeln, die als Leitelemente verwendet werden, ausgezeichnete Resultate zu erzielen.

Erfindungsgemäss wird dies nach Fig. 6a und Fig. 6b dadurch erreicht, daß als Leitelement 31 ein Sternnagel 34 verwendet wird, der aus einem leitfähigen Aluminium-Spritzgußmaterial besteht, oder einem anderen, sonstigen gut wärmeleitfähigen Material. Dieser Sternnagel besteht in ansich bekannter Weise aus vier Facetten und weist vorne gemäss Fig. 6a und Fig. 6b eine Spitze 36 auf, an der sich ein vier oder mehrere Facetten aufweisender Schaft 35 anschliesst.

Der Kopf 37 ist als erweiterte Scheibe ausgebildet. Mit der vorgesehenen Formgebung des Sternnagels 34 wird erreicht, daß ein solcher Sternnagel mit dem Kopf 37 an einer automatischen Zuführung (Magazin) eingespannt wird und mit einer automatischen Nagelmaschine gemäss Fig. 7 und 8 in die Verbundplatte 11 eingenagelt wird. Es wird abwechselnd der Kopf 37 von der Vorder- und von der Rückseite her in die Verbundplatte 11 eingetrieben, so daß sich das in Fig. 7 und 8 gezeichnete Bild ergibt, was die Vorder- und Rückseite der Verbundplatte zeigt. Nach dem Durchtreiben des Sternnagels durch die Verbundplatte schauen dann die Spitzen 36 aus der Verbundplatte heraus. Es werden dann die Spitzen abgefräst, so daß sich ein vollständiger, bündiger Abschluß des Kopfes 37 an der einen Seite und der Spitze 36 an der anderen Seite mit der Ebene der Verbundplatte ergibt.

Danach wird gemäss Fig. 9 die Aluminiumfolie 4 an der Ober- und Unterseite aufgeklebt, wodurch dann über den Sternnagel von der Unterseite auf die Oberseite hin erfolgt.

In einer anderen Ausführungsform kann es sogar vorgesehen sein, daß die Aluminiumfolie selbst an der Ober- und Unterseite vollständig entfällt. Es wird dann eine große Anzahl von Sternnägeln auf der Fläche verteilt, beispielsweise pro qm 300 Nägel.

In einer anderen Ausführungsform kann gemäss Fig. 6c als Leitelement 41 statt eines Sternnagels ein Schraubnagel 28 verwendet werden, der mit einem entsprechenden Presswerkzeug oder einem Hammer in die Verbundplatte eingetrieben wird. Die Konstruktion der fertigen Verbundplatte ist dann die gleiche, wie in Fig. 9 dargestellt.

Als weiteres Leitelement 51 ist eine Hohlschraube 29 vorgesehen, die aus einem Mutternstück 33 und einem zugeordneten Vaterstück 34 besteht, wobei das Mutternstück einen Kopf 38 und einen sich daran anschliessenden Hohlschaft aufweist, in dem ein Mutterngewinde eingearbeitet ist.

Bei dem Vaterstück 34 ist ein Bolzengewinde 36 angeordnet, wobei an der Oberseite ein Kopf 37 vorgesehen ist.

Zur Einbringung eines solchen Leitelementes 51 ist es gemäss der Fig. 3 erforderlich, entsprechende Bohrungen in der Verbundplatte 11 vorzunehmen, um dann zunächst das Mutternstück 33 einzusetzen, und dann von oben in die Platte das Vaterstück 37 einzuschrauben, wobei das Bolzengewinde 36 in das zugeordnete Mutterngewinde 35 eingreift.

In Fig. 11 ist eine mehrschichtige Verbundplatte gezeigt; dort besteht die Verbundplatte aus einem doppelten Plattenaufbau, nämlich aus der Verbundplatte 3o und der gleichartigen Verbundplatte 32. Beide Verbundplatten sind über eine Leichtmetallfolie 44 an der Innenseite miteinander in wärmeleitendem Kontakt verbunden, wobei in der vorher beschriebenen Weise die Leitelemente 31, 41, 51 die innere Leichtmetallfolie 44 durchgreifen. Es kommt hierbei bei horizontalen Temperaturunterschieden zu einem Ausgleich des Wärmeflusses in den Pfeilrichtungen 39 zwischen den einzelnen Leitelementen. Am Beispiel der Fig. 11 ist dargestellt, daß dieses Leitelement wiederum als Sternnagel 24 ausgebildet ist.

## ZEICHNUNGS-LEGENDE

1 Leitelement
2 Abbördelung
3 Deckel
4 Leichtmetallfolie
5 Spanplatte
6 Nut
7 Bohrung (tief)
8 Bohrung (erweitert)
9 Leichtmetallstreifen
10 Bereich
11 Verbundplatte
12 Dampfbremse
13 Rohrschlange
14 Isolierelement
15 Schallmatte
16 Betonboden
17 Wellkarton
18 Ausgleichsschüttung
19 Abdeckplatte
20 Ausgleichsschüttung
21 Bretterboden
24 Sternnagel
25 Schaft
26 Spitze
27 Kopf
28 Schraubnagel
29 Hohlschraube
30 Verbundplatte
31 Leitelement
32 Verbundplatte
33 Mutterstück
34 Vaterstück
35 Mutterngewinde
36 Bolzengewinde
37 Kopf
38 Kopf
39 Pfeilrichtung
41 Leitelement
44 Leichtmetallfolie
51 Leitelement

## Patentansprüche

1. Verbundplatte für eine Fußbodenheizung, welche die Heizelemente (Rohrschlangen oder elektrischen Heizdrähte) überdeckt, die in einer wärmeisolierenden Schicht (14) angeordnet sind, die gegebenenfalls über weitere wärmeisolierende Schichten (15, 19, 20) auf der bauseits vorhandenen Rohdecke (16, 21) aufliegt, dadurch gekennzeichnet, daß die Verbundplatte (11) aus einer Holz-Spanplatte (5) besteht, auf deren Ober- und Unterseite jeweils eine wärmeleitende Schicht angeordnet ist, und daß in gegenseitigem Abstand in der Spanplatte (5) vertikale Bohrungen (7) angeordnet sind, in denen jeweils ein gut-wärmeleitendes Leitelement (1, 31, 41, 51) in Körperkontakt mit der wärmeleitenden Schicht an der Unter-, sowie mit der wärmeleitenden Schicht an der Oberseite angeordnet ist.

2. Verbundplatte nach Anspruch 1 dadurch gekennzeichnet, daß die wärmeleitende Schicht aus einer jeweils mit der Ober- und Unterseite verklebten Leichtmetallfolie (4) besteht, die sich vollflächig über die Verbundplatte (11) erstreckt, (Fig. 1).

3. Verbundplatte nach Anspruch 1, dadurch gekennzeichnet, daß die wärmeleitende Schicht aus parallel im Abstand nebeneinander und die Stirnseiten der Leitelemente (1) unten und oben verbindenden Leichtmetallstreifen (9) besteht, (Fig.3).

4. Verbundplatte nach Anspruch 1, dadurch gekennzeichnet, daß das Leitelement aus einer kalt- oder wärmehärtbaren Vergußmasse besteht.

5. Verbundplatte nach Anspruch 1, dadurch gekennzeichnet, daß das Leitelement (1) aus einem zylindrischen Dosenkörper aus Leichtmetall besteht.

6. Verbundplatte nach Anspruch 5, dadurch gekennzeichnet, daß der zylindrische Dosenkörper des Leitelementes (1) einen geschlossenen Boden und einen abnehmbaren Deckel (3) aufweist, der auf einer stirnseitigen Abbördelung (2) vergrößerten Durchmessers des Dosenkörpers aufliegt.

7. Verbundplatte nach Anspruch 1, dadurch gekennzeichnet, daß das Leitelement (31, 41) aus einem Nagel (24, 28) besteht, und daß in dichtem Abstand abwechselnd von der einen und von der anderen Seite der Verbundplatte (11) eine Vielzahl von Nägeln (24, 28) die Verbundplatte (11) durchdringen, (Fig. 6a - 9).

8. Verbundplatte nach Anspruch 1, dadurch gekennzeichnet, daß das Leitelement (51) aus einer Hohlschraube (29) besteht, welche die Verbundplatte (11) durchdringt und die aus einer Schraube (34, 36, 37) besteht, die in ein zugeordnetes Mutterngewinde (35) eines Mutterstücks (33) eingeschraubt ist, (Fig. 10).

9. Verbundplatte nach einem der Ansprüche 1 - 8, gekennzeichnet durch einen mehrschichtigen Aufbau, bei dem zwei wärmedämmende Verbundplatten (30, 32) mit ihren Breitseiten aufeinander gelegt durch eine wärmeleitende Leichtmetallfolie (44) miteinander verbunden sind. (Fig. 11).

## Claims

1. Sandwich plate for underfloor heating which covers the heating elements (tubing or electric heating wires) which are arranged in an insulating layer (14) which is likewise laid over further insulating layers (15) (19) (20) which themselves rest on the rough flooring prepared by the builder, characterized as: that the sandwich plate (11) consists of a wooden chipboard panel (5) on whose upper and lower surfaces a heat conducting layer is arranged, and that vertical drillings (7) are equidistantly arranged in the panel (5) in which a good heat conducting element (1) (31) (41) (51) is in bodily contact with the heat conducting layers arranged on the upper and lower surfaces.

2. Sandwich plate according to Claim 1, characterized as: that the heat conducting layer consists of a light alloy foil (4) glued to the upper and lower surfaces of the sandwich plate (11) each of which extends over the full surface area of the plate (Ref. Fig. 1).

3. Sandwich plate according to Claim 1, characterized as: that the heat conducting layer consists of parallel light alloy strips (9) connecting both upper and lower surfaces of the conducting element (1) (Ref. Fig.3).

4. Sandwich plate according to Claim 1, characterized as: that the conducting element consists of either cold cured or heat cured sealing compound.

5. Sandwich plate according to Claim 1, characterized as: that the conducting element (1) consists of a cylindrical light alloy chamber.

6. Sandwich plate according to Claim 5, characterized as: that the cylindrical chamber of the conducting element (1) has a closed base and a removeable cover (3) and whose upper face has a flange (2) of larger diameter than that of the cylindrical chamber.

7. Sandwich plate according to Claim 1, characterized as: that the conducting element (31) (41) consists of a nail (24) (28) and that a quantity of such nails (24) (28), closely pitched, penetrate the sandwich plate (11) alternately from either side (Ref. Fig. 6a-9).

8. Sandwich plate according to Claim 1, characterized as: that the conducting element (51) consists of a hollow screw (29) which penetrates the sandwich plate (11) and which consists of a screw (34) (36) (37) which is screwed into the corresponding female thread (35) of the female piece (33) (Ref. Fig.10).

9. Sandwich plate according to one of Claims 1 to 8, characterized by a multi-layer construction in which two heat insulating sandwich plates (30) (32) are laid on top of each other with their surfaces connected by a heat-conducting metal foil (44)(Ref. Fig.11).

## Revendications

1. Plaque composite pour un sol chauffant, recouvrante les élément de chauffage (tuyaux serpentins ou filaments chauffants électriques) disposes dans une couche calorifuge (14) étant couchée, le cas échéant, par d'autres couches calorifuges (15, 19, 20) sur le plafond brut déjà existant et incombant au maître de l'ouvrage,
caractérisée en ce que la plaque composite (11) consiste en un panneau de bûchettes (5), sur la partie supérieure et inférieure duquel est disposée une couche calorifuge, et qu'à distance mutuelle das forures verticales (7) sont disposées, dans lesquelles chaque fois un élément bien calorifuge (1, 31, 41, 51) est disposé par un contact directe avec la couche conductrice de la chaleur sur la partie inferieure, et avec la couche conductrice de la chaleur sur la partie supérieure.

2. Plaque composite conformément à la revendication 1, caractérisée en ce que la couche conductrice de la chaleur consiste en une feuille d'alliage léger (4) chaque fois collée sur la partie supérieure et inférieure et dont la surface entière s'étend sur la plaque composite (11), (fig. 7).

3. Plaque composite conformément à la revendication 1, caractérisée en ce que la couche conductrice de la chaleur consiste en des bandes d'alliage léger juxtaposées à distances parallèles et connectantes les côtés frontaux des éléments conducteurs en bas et en haut (9) (fig. 13).

4. Plaque composite conformément à la revendication 1, caractérisée en ce que l'élément conducteur est composé d'une masse de remplissage durcissable à froid ou à chaud.

5. Plaque composite conformément à la revendication 1, caractérisée en ce que l'élément conducteur (1) consiste en un corps cylindrique en forme de boîte d'alliage léger.

6. Plaque composite conformément à la revendication 5, caractérisée en ce que le corps cylindrique en forme de boîte de l'élément conducteur (1) comporte un fond fermé et un couvercle amovible (3) couché sur le côté frontal d'un collet rabattu à diamètre agrandi du corps en forme de boîte.

7. Plaque composite conformément à la revendication 1, caractérisée en ce que l'élément conducteur (31, 41) consiste en un clou (24, 28), et qu'à distance dense un grand nombre de clous (24, 28) traversent la plaque composite alternativement de l'un et de l'autre côté de la plaque composite (11), (fig. 6a -9).

8. Plaque composite conformément à la revendication 1, caractérisée en ce que l'élément conducteur (51) consiste en une vis creuse (29) traversante la plaque composite (11), et qui consiste d'une vis (34, 36, 37) vissée dans un filet femelle (35) d'une pièce à écrou (33), (fig. 10).

9. Plaque composite conformément à une des revendications 1 - 8, caractérisée par une structure à plusieurs couches, dans laquelle deux plaques composites calorifuges (30, 32), posées l'une sur l'autre avec leurs côtés larges, sont connectées, l'une avec l'autre par une feuille
d'alliage léger conductrice de la chaleur (fig. 11).

FIG 1

FIG 2

FIG 3

0 089 012

FIG 6A 26    31    24,25    27

FIG 6C    28    41

FIG 7    11    24,27    24,25

FIG 8    11    24,27    24,25

FIG 9    11    4    24    24

4

FIG 6B    26    31

FIG 10    38    33    35    29,51    34    36    37

FIG 11    4    24    39    24

30

32    44

4